# EUROPEAN PATENT APPLICATION

(11) **EP 2 677 518 A2**
(43) Date of publication of application: **25.12.2013**
(21) Application number: 13169877.1
(22) Date of filing: 30.05.2013
(51) Int. Cl.: G10L 15/18, G06F 17/27

(54) **Method for providing voice recognition function and electronic device thereof**

(30) Priority: 31.05.2012 KR 20120058125
(71) Applicant: Samsung Electronics Co., Ltd, Gyeonggi-do 443-742 (KR)
(72) Inventor: Kim, Hee Woon, Gyeonggi-do (KR); Ahn, Yu-Mi, Seoul (KR); Kim, Seon-Hwa, Seoul (KR); Jeon, Ha-Young, Seoul (KR)
(74) Representative: Nederlandsch Octrooibureau

(57) **Abstract**

A method for providing a voice recognition function and an electronic device thereof are provided. The method provides a voice recognition function in an electronic device that includes outputting, when a voice instruction is input, a list of prediction instructions that are candidate instructions similar to the input voice instruction, updating, when a correction instruction correcting the output candidate instructions is input, the list of prediction instructions, and performing, if the correction instruction matches with an instruction of high similarity in the updated list of prediction instructions, a voice recognition function corresponding to the voice instruction.

## Description

### BACKGROUND OF THE INVENTION

### 1. Field of the Invention:

The present invention relates to an electronic device and method for providing a voice recognition function. More particularly, the present invention relates to an apparatus and method for correcting an erroneously recognized voice instruction by a user's voice in an electronic device.

### 2. Description of the Related Art:

Portable electronic devices have become necessities for modem people due to the ease of carrying such multimedia devices, and have evolved to provide various services such as a voice and video call function, an information input and output function, and a data storage function.

For example, the electronic devices have evolved into multimedia equipment capable of providing phone books, games, short messages, electronic mail (e-mail) messages, morning wakeup calls, MPEG-1 Audio Layer 3 (MP3) players, digital cameras, wireless Internet services, and the like.

Further, in recent years, an electronic device employing a voice recognition technology has been launched. Originating from a function of inputting a name stored in a phone book and establishing a call, a function of Speech-To-Text (STT), and the like, the voice recognition technology capable of being applied to an electronic device has grown and made it possible to further control the operation of the electronic device.

For instance, an electronic device can sense a user's voice instruction and activate a text message function, a scheduling function, a camera function, and the like. This is because the electronic device can recognize a user's instruction for function control.

However, recently, voice recognition performance has improved so as to allow for the detailed control of a corresponding function in addition to an instruction for function activation.

As an example, a text message function is described. A user has become able to designate a recipient of a text message after inputting message content using a voice instruction.

To perform the text message function, after analyzing the voice instruction received from the user, the electronic device provides a list of analysis results in a text form. In one embodiment, the electronic device includes instructions, which are similar to the analyzed instruction, in the list of analysis results, and outputs a final list. From the finally output list, the user selects an instruction for a function that he/she intends to perform, through a touch input or a key input. The output list is a list that includes instructions accurately recognized by the electronic device, and may also include instructions erroneously recognized by the electronic device.

In the case of using the analysis results in text form, the user can directly select an instruction for a desired function, and can accurately and rapidly execute the desired function. However, this is not performing an instruction selection process based on voice recognition, thus failing to meet the desire of the user who intends to control the electronic device through voice recognition.

Therefore, a need exists for a system and method for an apparatus and method for correcting an erroneously recognized instruction by user's voice in an electronic device.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages below. Accordingly, an aspect of the present invention is to provide an apparatus and method for improving the performance of a voice recognition function in an electronic device.

Another aspect of the present invention is to provide an apparatus and method for correcting an erroneously recognized instruction through a user's voice instruction in an electronic device.

A further aspect of the present invention is to provide an apparatus and method for, when sensing an instruction correction request, updating the instruction recognition result in an electronic device.
The above aspects are achieved by providing a method for providing a voice recognition function and an electronic device thereof.

According to an aspect of the present invention, a method for providing a voice recognition function in an electronic device is provided. The method includes outputting, if a voice instruction is input, a list of prediction instructions that are candidate instructions similar to the input voice instruction, updating, when a correction instruction correcting the output candidate instructions is input, the list of prediction instructions, and performing, if the correction instruction matches with an instruction of high similarity in the updated list of prediction instructions, a voice recognition function corresponding to the voice instruction.

Creating and outputting the list of prediction instructions may further include defining and outputting a candidate instruction having high similarity to the input voice instruction from among the list of prediction instructions.

Updating the list of prediction instructions may further include deleting a candidate instruction having high similarity to the input voice instruction from among the list of candidate instructions included in the list of prediction instructions, and updating a previously created list of prediction instructions, and defining and outputting a candidate instruction having high similarity to the input voice instruction from among the updated list of prediction instructions.

The method for providing the voice recognition function in the electronic device may include making a request for a re-input of an erroneously recognized instruction in the input voice instruction, and creating a list of prediction instructions that are candidate instructions similar to the re-input instruction.

The erroneously recognized instruction may be output in at least one of an audio form, a text form, and marking.

Creating the list of prediction instructions may include sorting the candidate instructions in order of similarity with the input voice instruction.

According to another aspect of the present invention, an electronic device for providing a voice recognition function is provided. The device includes an audio processor for processing a voice instruction for function execution, a display unit for outputting an analysis result from the processing of the voice instruction, at least one processor for executing computer programs, a memory for storing data and instructions, and at least one program stored in the memory and configured to be executable by the at least one processor. If a voice instruction is input, the at least one program creates and outputs a list of prediction instructions that are candidate instructions similar to the input voice instruction, updates, when a correction instruction correcting the output candidate instructions is input, the list of prediction instructions, and performs, if the correction instruction matches with an instruction of high similarity in the updated list of prediction instructions, a voice recognition function corresponding to the voice instruction.

The program may include an instruction of processing to create the list of prediction instructions and to define and output a candidate instruction having high similarity to the input voice instruction from among the list of prediction instructions.

The program may include an instruction of processing to update the list of prediction instructions, by deleting a candidate instruction having high similarity to the input voice instruction from among the list of candidate instructions included in the list of prediction instructions, updating the previously created list of prediction instructions, and defining and outputting a candidate instruction having high similarity to the input voice instruction from among the updated list of prediction instructions.

The program may include an instruction of processing to make request for a re-input of an erroneously recognized instruction in the input voice instruction, and to create a list of prediction instructions that are candidate instructions similar to the re-input instruction.

The program may process to output the erroneously recognized instruction in at least one of an audio form, a text form, and marking.

The program may include an instruction to sort the candidate instructions in order of similarity with the input voice instruction and to create the list of prediction instructions.

According to a further aspect of the present invention, a computer-readable storage medium storing at least a program is provided. The program includes instructions of processing an electronic device to perform, if a voice instruction is input, creating and outputting a list of prediction instructions that are candidate instructions similar to the input voice instruction, whenever a correction instruction correcting the output candidate instructions is input, updating the list of prediction instructions, and, if the correction instruction matches with an instruction of high similarity in the updated list of prediction instructions, performing a voice recognition function corresponding to the voice instruction, when it is executed by the electronic device.

In accordance with another aspect of the present invention, a method for managing an input voice instruction in an electronic device is provided. The method includes receiving an input voice instruction from a user, creating a list of candidate instructions that are similar to the input voice instruction, outputting the list of candidate instructions, and performing, based on a selection of one from among the list of candidate instructions by the user, a voice recognition function corresponding to the voice instruction.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a construction of an electronic device providing a voice recognition function according to an exemplary embodiment of the present invention;

FIG. 2 is a flowchart illustrating a process of providing a voice recognition function in an electronic device according to an exemplary embodiment of the present invention;

FIG. 3 is a flowchart illustrating a process of updating a list of prediction instructions in an electronic device according to an exemplary embodiment of the present invention;

FIGs. 4A-C are diagrams illustrating a screen providing a voice recognition function in an electronic device according to an exemplary embodiment of the present invention; and

FIGs. 5A-D are diagrams illustrating a screen providing a voice recognition function in an electronic device according to an exemplary embodiment of the present invention.

Throughout the drawings, it should be noted that like reference numbers are used to depict the same or similar elements, features, and structures.

### DETAILED DESCRIPTION OF THE exemplary EMBODIMENTS

The following descriptions with reference to the accompanying drawings are provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Below, the present invention describes an apparatus and method for correcting an erroneously recognized instruction using a user's voice instruction, thereby improving the performance of a voice recognition function in an electronic device.

Further, the electronic device can be a device such as a portable terminal, a mobile phone, a media player, a tablet computer, a handheld computer, or a Personal Digital Assistant (PDA). Also, the electronic device may be any portable electronic device including a device having a combination of two or more functions among these devices.

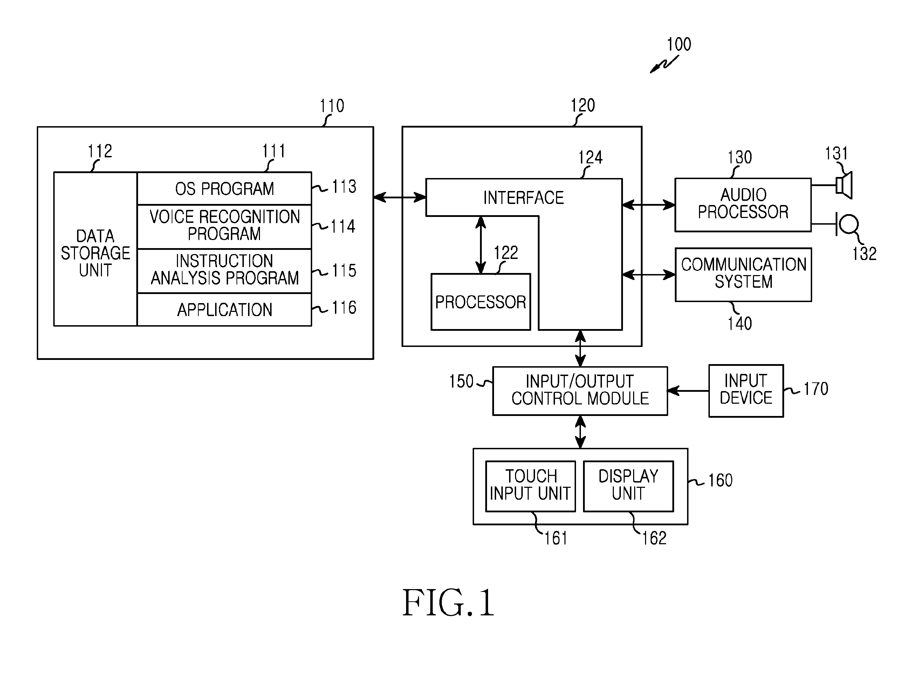

FIG. 1 is a block diagram illustrating a construction of an electronic device providing a voice recognition function according to an exemplary embodiment of the present invention.

Referring to FIG. 1, the electronic device 100 includes a memory 110, a processor unit 120, an audio processor 130, a communication system 140, an input/output controller 150, a touch screen 160, and an input device 170. Hereinafter, the memory 110 and the communication system 140 may be provided in plural.

Each of the constituent elements is described below.

The memory 110 includes a program storage unit 111 and a data storage unit 112. The program storage unit 111 stores a program for controlling an operation of the electronic device 100. The data storage unit 112 stores data generated during program execution. For instance, the data storage unit 112 may store various updateable safekeeping data such as a phone book, an outgoing message and an incoming message, and prediction instructions used for recognition of a user's voice. Here, the prediction instructions may mean instructions capable of being inferred from a user's voice instruction.

Further, the program storage unit 111 may include an Operating System (OS) program 113, a voice recognition program 114, an instruction analysis program 115, and at least one application 116. Here, the program included in the program storage unit 111 may be a set of instructions, and may be expressed as an instruction set.

The OS program 113 includes various software constituent elements controlling general system operation. This control of the general system operation may include memory control and management, storage hardware (device) control and management, power control and management, and the like. This OS program 113 may perform even a function of making smooth communication between various hardware (i.e., the device) and software constituent elements (modules).

The voice recognition program 114 may include at least one or more software constituent elements for processing to recognize a user's voice and processing to control the function of the electronic device depending on the recognized user's voice. In an exemplary embodiment, the voice recognition program 114 processes to execute at least any one of a camera function, a text message function, a scheduling function, and a browser function using a voice instruction that is input from a user.

Further, the voice recognition program 114 may process to recognize a user's voice and provide prediction instructions and, in response to a voice instruction correction request, update and provide the prediction instructions according to an exemplary embodiment of the present invention. In an exemplary embodiment, the voice recognition program 114 may identify a correction instruction by analyzing a previous instruction and an instruction re-recognized responsive to the instruction correction request, and may acquire and provide prediction instructions for the identified correction instruction. In such case, the voice recognition program 114 may process to delete a previously provided prediction instruction from the prediction instructions for the correction instruction, thereby enhancing the accuracy of instruction recognition.

That is, the voice recognition program 114 may process to sense a user's voice instruction for voice function execution, and may correct an erroneously recognized instruction by means of a successive user's voice instruction.

For instance, if the voice recognition program 114 recognizes a voice instruction "send message to Jenny" from a user, the electronic device may have a high recognition rate in connection with the instruction "send message," but may have a low recognition rate in connection with the instruction "Jenny," who is a recipient. Accordingly, the voice recognition program 114 may provide the user with prediction instructions "Johnny", "Jane", "Jenny", etc. for the instruction "Jenny" having the low recognition rate. Here, the prediction instructions can be candidate instructions similar to the voice instruction input by the user.

In an exemplary embodiment, the voice recognition program 114 may list the prediction instructions in the order of instructions determined to be similar to the user's voice instruction (i.e., in order beginning with an instruction having a highest level of similarity).

Next, after providing the prediction instructions to the user, the voice recognition program 114 may compare a re-input voice instruction with a priority prediction instruction of the list of prediction instructions and, if the re-input voice instruction matches with the priority instruction of the list of prediction instructions, performs a function corresponding to the re-input voice instruction.

In contrast, if the re-input voice instruction does not match with the priority instruction of the list of prediction instructions, the voice recognition program 114 may create a list of prediction instructions deleting the priority instruction. That is, the voice recognition program 114 may delete the priority instruction "Johnny" from the list of prediction instructions "Johnny", "Jane", and "Jenny", and may update the list of prediction instructions "Johnny", "Jane", and "Jenny" into a list of prediction instructions "Jane", and "Jenny". The instruction analysis program 115 may include at least one or more software constituent elements for analyzing a voice instruction that is input from a user.

In an exemplary embodiment, the instruction analysis program 115 may perform a function of analyzing a user's voice instruction for function execution and providing the analysis result to the processor unit 120. In an exemplary embodiment of the present invention, the instruction analysis program 115 may determine a correction instruction for a previously recognized voice instruction. This is to determine an erroneously recognized instruction in the previously recognized voice instruction. The instruction analysis program 115 can identify an instruction that a user intends to correct by comparing the previously recognized voice instruction with a re-recognized voice instruction. Further, the instruction analysis program 115 may identify the instruction that the user intends to correct, by identifying an instruction that is input after a word for instruction correction.

The application 116 may include a software constituent element for at least one application installed in the electronic device 100.

The processor unit 120 may include at least one processor 122 and an interface 124. Here, the processor 122 and the interface 124 can be integrated as at least one integrated circuit, or can be realized as separate constituent elements.

The interface 124 may perform a role of a memory interface controlling the access of the processor 122 and the memory 110.

Further, the interface 124 may perform a role of a peripheral interface controlling a connection between an input/output peripheral device of the electronic device 100 and the processor 122 of the electronic device 100.

The processor 122 controls the electronic device 100 to provide a voice recognition function using at least one software program. In an exemplary embodiment, the processor 122 controls to execute at least one program stored in the memory 110 and provide a voice recognition function corresponding to the executed program. For instance, the processor 122 may include a voice recognition processor for recognizing a user's voice instruction and for providing prediction instructions corresponding to the recognized voice instruction. That is, the voice recognition function of the electronic device 100 may be executed using software such as a program stored in the memory 110 or hardware such as the voice recognition processor.

The audio processor 130 provides an audio interface between a user and the electronic device 100 through a speaker 131 and a microphone 132, and receives an input of a voice instruction intending to perform a voice recognition function.

The communication system 140 performs a communication function for voice communication of the electronic device 100 and data communication thereof. In an exemplary embodiment, the communication system 140 may be divided into a plurality of communication sub modules supporting different communication networks. For instance, the communication network includes, although not limited to, Global System for Mobile Communication (GSM) network, an Enhanced Data GSM Environment (EDGE) network, a Code Division Multiple Access (CDMA) network, a Wireless - Code Division Multiple Access (W-CDMA) network, a Long Term Evolution (LTE) network, an Orthogonal Frequency Division Multiple Access (OFDMA) network, a Wireless Local Area Network (WLAN), a Bluetooth network, and a Near Field Communication (NFC) and the like.

The input/output controller 150 provides interface between an input output device such as the touch screen 160, the input device 170, and the like, and the interface 124.

The touch screen 160 is an input output device performing output of information and input of information, and may include a touch input unit 161 and a display unit 162.

The touch input unit 161 provides touch information, which is sensed through a touch panel, to the processor unit 120 through the input output controller 150. In an exemplary embodiment, the touch input unit 161 may change the touch information into an instruction structure such as touch_down, touch_move, and/or touch_up, and provides the instruction structure to the processor unit 120.

The display unit 162 may display status information of the electronic device 100, a character input by a user, a moving picture, a still picture, and the like. In exemplary embodiments, the display unit 162 may display the voice recognition result, prediction instructions, and/or a voice recognition process.

The input device 170 provides input data generated by user's selection to the processor unit 120 through the input output controller 150. In exemplary embodiments, the input device 170 is constructed including only a control button for control of the electronic device 100. Alternatively, the input device 170 may be constructed as a keypad for receiving input data from the user.

Although not illustrated, the electronic device 100 may further include constituent elements providing supplementary functions such as a camera module for image or video pickup, a broadcast reception module for broadcast reception, a digital sound playback module such as an MP3 module, a local area wireless communication module for local area wireless communication, a proximity sensor module for proximity sensing, and the like, including software for operations thereof.

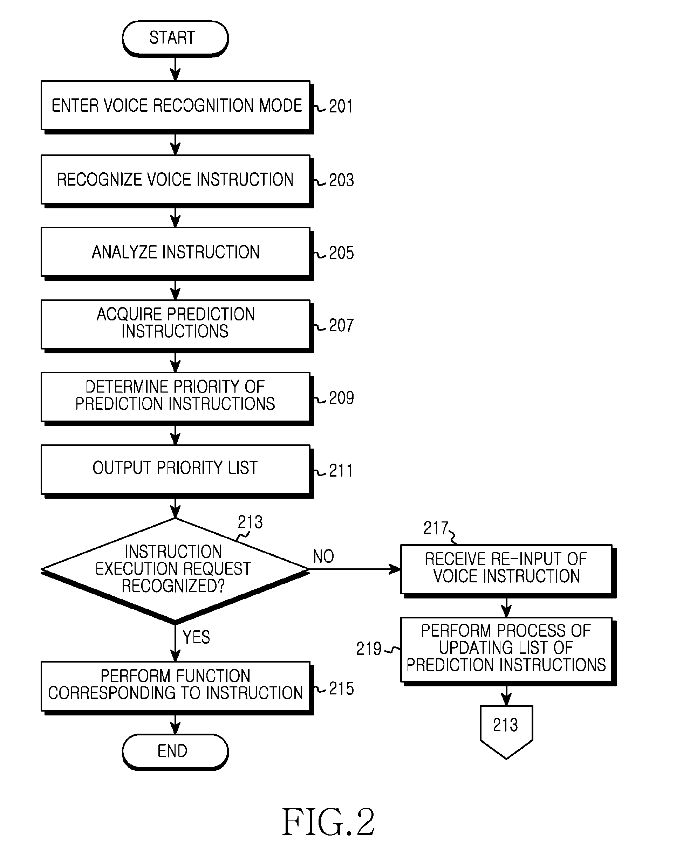

FIG. 2 is a flowchart illustrating a process of providing a voice recognition function in an electronic device according to an exemplary embodiment of the present invention.

Referring to FIG. 2, first, in step 201, the electronic device enters a voice recognition mode. Here, the voice recognition mode refers to a mode of controlling the function of the electronic device according to a user's voice instruction. Generally, the electronic device can activate a text message function, a scheduling function, a camera function, and the like, through the voice recognition mode. In exemplary embodiments, the electronic device may perform a conversation function of providing a response to a user's voice through the voice recognition mode. Further, the electronic device may send a text message to a specific user after receiving an input of message content through the voice recognition mode.

The electronic device then proceeds to step 203 and receives an input of a voice instruction from a user. Next, the electronic device proceeds to step 205 and performs a process of analyzing the received voice instruction.

Here, the process of analyzing the received voice instruction can be a process of identifying an instruction for distinguishing words and sentences of the voice instruction provided from the user and controlling the function of the electronic device by means of the distinguished words or sentences.

Next, the electronic device proceeds to step 207 and acquires prediction instructions for the analyzed voice instruction. After that, the electronic device proceeds to step 209 and determines the priority of the acquired prediction instructions. Here, the prediction instructions, which are the primary determination result of the user's voice instruction, represent instructions similar to the user's voice instruction. Further, the priority of the prediction instructions is set in the order of prediction instructions to be provided to the user. As priority becomes higher, the probability of matching a prediction instruction with the user's analyzed voice instruction becomes higher.

For instance, if recognizing a voice instruction "send message to Jenny" from a user, the electronic device may acquire the prediction instructions "send message to Jane", "send message to Johnny", and "send message to Jenny," for the recognized voice instruction "send message to Jenny".

Next, the electronic device proceeds to step 211 and outputs a priority list for the prediction instructions. After that, the electronic device proceeds to step 213 and identifies if it recognizes an instruction execution request from the user. That is, in a state where the electronic device outputs the priority list of prediction instructions, the electronic device identifies whether it recognizes a user's voice for executing at least any one prediction instruction among the output list of prediction instructions. Step 213 may be a process in which a user re-inputs a voice instruction because the electronic device determines that it has failed to recognize the voice instruction.

According to another exemplary embodiment of the present invention, in a state where the electronic device outputs only a prediction instruction of highest priority in step 211, the electronic device may identify if it recognizes a user's voice for executing the output prediction instruction.

If it is identified in step 213 that the electronic device does not accurately recognize the instruction execution request, the electronic device proceeds to step 217 and receives a re-input of the voice instruction from the user. After that, the electronic device proceeds to step 219 and performs a process of updating the list of prediction instructions. Here, the process of updating the list of prediction instructions is a process of updating previously provided prediction instructions suitably to the voice instruction that is re-input from the user. This is to solve a problem whereby the electronic device cannot provide a voice recognition function because the electronic device having erroneously recognized a voice instruction provided from the user cannot provide prediction instructions for the erroneously recognized voice instruction. As one example thereof, the electronic device may delete a prediction instruction having high priority in a previous list of prediction instructions, may update the previous list of prediction instructions into a new list of prediction instructions, and may provide the new list of prediction instructions to the user, thereby improving the recognition rate for a user's voice instruction. For example, if the priority of the "send message to Jane" among the previously provided prediction instructions "send message to Jane", "send message to Johnny", and "send message to Jenny" is high, the electronic device can update the previously provided prediction instructions "send message to Jane", "send message to Johnny", and "send message to Jenny" into prediction instructions "send message to Johnny" and "send message to Jenny".

After updating the list of prediction instructions in step 219, the electronic device proceeds to step 213 and identifies if it recognizes an instruction execution request from the user. If the electronic device does not recognize the instruction execution request, in other words, if the electronic device receives a re-input of the voice instruction from the user, the electronic device may delete a previously provided prediction instruction from the list of prediction instructions and then provide a prediction instruction of next priority.

In contrast, if it is identified in step 213 that the electronic device accurately recognizes the instruction execution request from the user, the electronic device proceeds to step 215 and performs a function corresponding to the voice instruction.

That is, after the electronic device inputs the voice instruction, the electronic device according to the present invention can perform even a selection process and a correction process for the voice instruction through an input of a user's voice.

After that, the electronic device terminates the algorithm of the present invention.

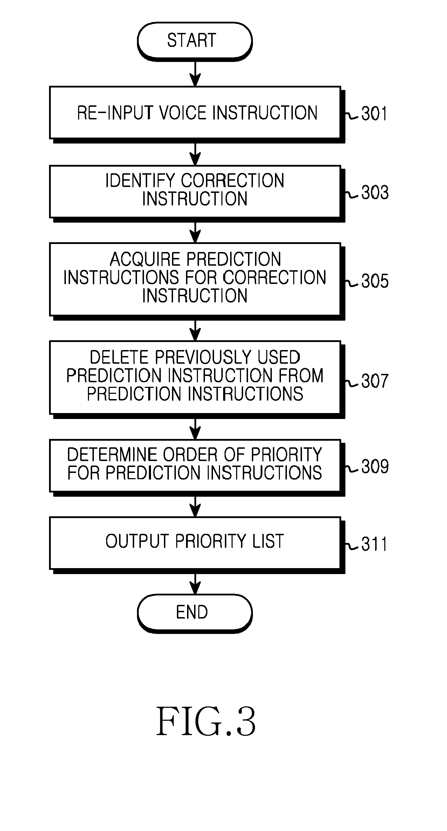

FIG. 3 is a flowchart illustrating a process of updating a list of prediction instructions in an electronic device according to an exemplary embodiment of the present invention.

Referring to FIG. 3, it is assumed that the electronic device recognizes a voice instruction "send message to Jenny" from a user, acquires prediction instructions including "send message to Jane", "send message to Johnny", and "send message to Jenny", and determines that, among the prediction instructions "send message to Jane", "send message to Johnny", and "send message to Jenny", that the "send message to Jane" is most similar to the voice instruction "send message to Jenny" recognized from the user. Further, a process of updating a list of prediction instructions refers to a process in which the electronic device updates a list of candidate instructions because of failing to accurately recognize a user's voice instruction.

First, in step 301, the electronic device receives a re-input of a voice instruction. After that, the electronic device proceeds to step 303 and identifies an instruction that a user wants to correct, using the voice instruction that is re-input in step 301. Here, the correction instruction, which is a portion that the user wants to correct in a previously input voice instruction, can be a partial or whole word or sentence.

In an exemplary embodiment, the electronic device may compare the re-input instruction with a previously recognized instruction and then identify that a user wants to correct different portions of the re-input instruction and the previously recognized instruction. In an exemplary embodiment, if the electronic device receives a re-input of an instruction "send message to the XXX" after receiving an input of "send message to the Jenny" from the user, the electronic device may identify that an instruction (i.e., a correction instruction) that the user wants to correct is not an instruction ("send message") for function execution, but is instead an instruction ("to the XXX") for a recipient. To express the "to the XXX" in the situation is to express that the electronic device fails to accurately recognize the instruction for the recipient.

Further, the electronic device may receive an input of a correction instruction (i.e., "Replace recipient Jenny"), together with an instruction of notifying correcting, from the user.

Additionally, the electronic device may receive a re-input of only an instruction (e.g., "Jenny") that the user wants to correct, from the user.

Next, the electronic device proceeds to step 305 and acquires prediction instructions for the correction instruction. After that, the electronic device proceeds to step 307 and deletes a previously used prediction instruction from the acquired prediction instructions. In an exemplary embodiment, the electronic device may delete the "send message to Jane", which is an instruction (i.e., an instruction of high priority) determined to be most similar to the user's voice instruction "send message to Jenny", from the list of prediction instructions "send message to Jane", "send message to Johnny", and "send message to Jenny".

Next, the electronic device proceeds to step 309 and determines the order of priority for the prediction instructions. After that, the electronic device proceeds to step 311 and outputs a priority list of the prediction instructions.

That is, the electronic device processes to determine an instruction that it has erroneously recognized by means of an instruction re-input from a user, and to remove the erroneously recognized instruction from a list of prediction instructions, thereby increasing a voice recognition success rate.

After that, the electronic device terminates the algorithm of the present invention.

Operations corresponding to FIG. 2 or FIG. 3 may be implemented through a program stored in a memory of the electronic device or at least one or more processors provided in the electronic device.

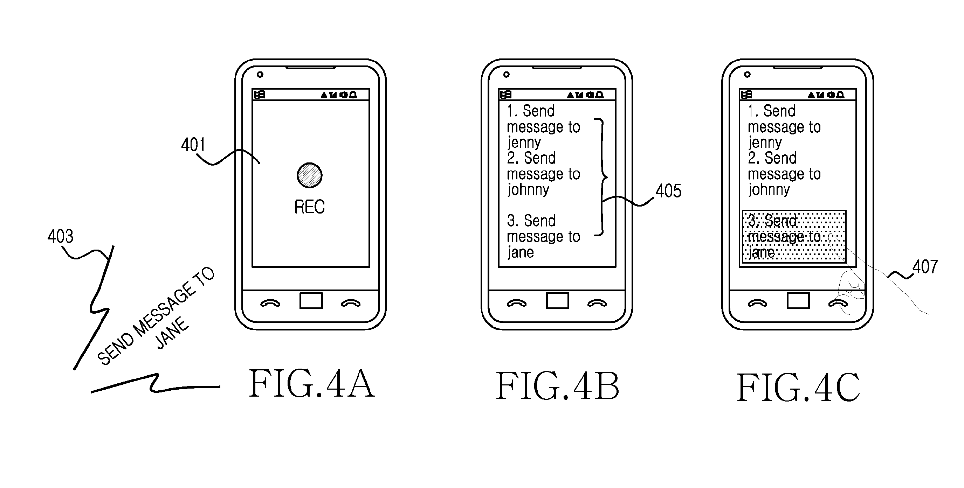

FIGs. 4A-4C are diagrams illustrating a screen providing a voice recognition function in an electronic device according to an exemplary embodiment of the present invention.

Referring to FIG. 4A, the electronic device enters a voice recognition mode 401 for receiving an input of a user's voice instruction, and then recognizes a voice instruction 403 generated by a user.

More specifically, the electronic device recognizes "send message to Jane" that is the voice instruction 403 generated by the user.

The electronic device recognizing the user's voice instruction as above outputs the recognition result on the voice instruction 403. In an exemplary embodiment, the electronic device outputs a plurality of prediction instructions as the primary prediction result on the input voice instruction 403. The prediction instructions, which are instructions capable of being inferred from the user's voice instruction 403, represent instructions determined to be similar to the user's voice instruction 403 selected from among previously stored instructions.

Referring to FIG. 4B, the electronic device outputs prediction instructions 405 such as "send message to Jenny", "send message to Johnny", and "send message to Jane" for the "send message to Jane" that is the voice instruction 403 input from the user. This means that, because the electronic device fails to clearly recognize the "Jane", the electronic device has generated at least any one instruction among the "Jenny", "Johnny", and "Jane".

Referring to FIG. 4C, the user of the electronic device selects 407 a prediction instruction matching with the voice instruction 403from among the output prediction instructions, and then performs a function corresponding to the selected prediction instruction. That is, through touch input or key input, the user of the electronic device selects the prediction instruction for the function that the user intends to perform.

FIG. 4C illustrates that, through the touch input, the user of the electronic device selects 407 a prediction instruction "send message to Jane," matching with the voice instruction 403 generated by the user, from among the output prediction instructions 405 of FIG. 4B.

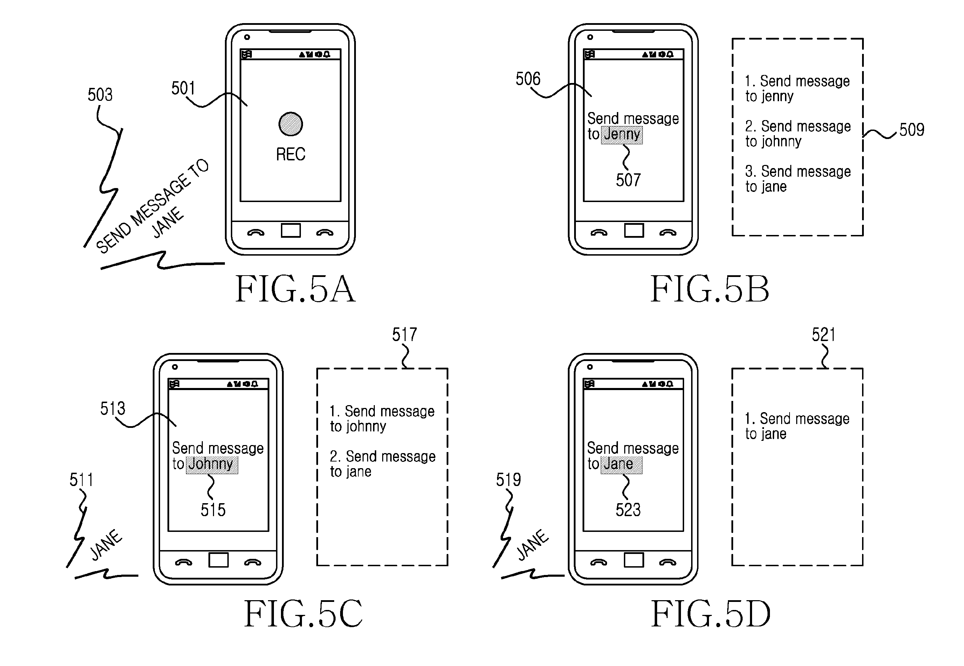

FIGs. 5A-5D are diagrams illustrating a screen providing a voice recognition function in an electronic device according to an exemplary embodiment of the present invention.

Referring to FIG. 5A, the electronic device enters a voice recognition mode 501 for receiving an input of a user's voice instruction 503, and then recognizes a voice instruction generated by a user.

More specifically, the electronic device recognizes "send message to Jane" that is the voice instruction 503 generated by the user.

The electronic device recognizing the user's voice instruction as above outputs the recognition result on the voice instruction 503. In an exemplary embodiment, the electronic device acquires a plurality of prediction instructions as the primary prediction result on the input voice instruction, and then outputs a prediction instruction of highest priority. Here, the prediction instructions, which are instructions capable of being inferred from the user's voice instruction 503, represent instructions determined to be similar to the user's voice instruction 503 from among previously stored instructions.

Referring to FIG. 5B, the electronic device acquires 509 prediction instructions such as "send message to Jenny", "send message to Johnny", and "send message to Jane" for the "send message to Jane" that is the voice instruction 503 input from the user and then, outputs 506 the prediction instruction "send message to Jenny" determined to be of highest priority.

In an exemplary embodiment, the electronic device can mark 507 an instruction "Jenny" that it fails to clearly recognize, and allow a user to re-input a correction instruction for the erroneously recognized portion "Jenny".

Accordingly, the user of the electronic device makes a request for correction to the erroneously recognized instruction "Jenny".

In an exemplary embodiment, the electronic device may receive only a correction request instead of receiving a re-input of an instruction. In this case, the electronic device can re-acquire prediction instructions for a portion of an instruction that is marked as failing to be clearly recognized, and provide the re-acquired prediction instructions to the user.

In another exemplary embodiment, the electronic device can receive a re-input of an instruction together with a correction request. In this case, the electronic device can re-acquire prediction instructions for the re-input instruction and provide the re-acquired prediction instructions to the user.

Referring to FIG. 5C, the electronic device recognizes "Jane" that is a correction instruction 511 generated from the user. In an exemplary embodiment, the electronic device acquires 517 prediction instructions "send message to Johnny" and "send message to Jane" for the "Jane" that is the correction instruction 511, and then outputs 513 the prediction instruction "send message to Johnny" determined to be of higher priority. At this time, the electronic device may remove the previously used prediction instruction (i.e., the prediction instruction "send message to Jenny" provided to the user before the correction instruction 511 is input) from the previous prediction instructions 509 "send message to Jenny", "send message to Johnny", and "send message to Jane", thereby increasing a voice recognition success rate. That is, the electronic device may update the prediction instructions 509 "send message to Jenny", "send message to Johnny", and "send message to Jane" into the prediction instructions 517 "send message to Johnny" and "send message to Jane". This is to delete the prediction instruction "send message to Jenny" for the "Jenny" of highest priority from the previous prediction instructions 509 "send message to Jenny", "send message to Johnny", and "send message to Jane".

In exemplary embodiments, the electronic device can mark 515 an instruction "Johnny" that it fails to clearly recognize, and allow the user to re-input the correction instruction "Jane" for the erroneously recognized portion "Johnny".

Referring to FIG. 5D, the electronic device receives a re-input of "Jane" that is a correction instruction 519 in a state of providing the prediction instruction "send message to Johnny" for the correction instruction 511. In an exemplary embodiment, the electronic device can acquire and output 521 a list of prediction instructions reflecting a deletion of the previously provided prediction instruction "send message to Johnny" from the prediction instructions "send message to Johnny" and "send message to Jane" for the correction instruction 511.

That is, whenever a correction instruction is input, the electronic device may delete a previously used prediction instruction and may update prediction instructions, thereby correcting an erroneously recognized instruction. If determining that there is an erroneously recognized instruction, the electronic device may mark 523 an erroneously recognized portion of an instruction and allow a user to re-input a correction instruction for the erroneously recognized portion.

Further, the electronic device may process to provide a voice instruction in audio form, which is determined to be erroneously recognized, and subsequently allow the user to correct the erroneously recognized voice instruction.

In an exemplary embodiment, if the electronic device recognizes a voice instruction "send message to Jane" and then determines that it has erroneously recognized the "Jane", the electronic device can process to correct the erroneously recognized voice instruction by outputting "Jane?" in an audio form, and then allow the user to re-input "Jane" in response to this.

An operation corresponding to FIGs. 5A-5D may be implemented through a program stored in a memory of the electronic device or at least one or more processors provided in the electronic device.

In exemplary embodiments, the electronic device according to the present invention performs a process of, if a voice instruction is input, creating and outputting a list of prediction instructions that are candidate instructions similar to the input voice instruction, The device then performs a process of, whenever a correction instruction for correcting the output candidate instructions is input, updating the list of prediction instructions. Next, if the correction instruction matches with an instruction of high similarity in the updated list of prediction instructions, the device performs a voice recognition function corresponding to the voice instruction.

Thus, if the electronic device erroneously recognizes a user's voice instruction, it is possible to receive a re-input of the erroneously recognized voice instruction. The electronic device may perform the above operation using a program stored in a memory of the electronic device.

Additionally, the electronic device according to the present invention may include a means of, if a voice instruction is input, creating and outputting a list of prediction instructions that are candidate instructions similar to the input voice instruction, a means of, whenever a correction instruction for correcting the output candidate instructions is input, updating the list of prediction instructions, and a means of, if the correction instruction matches with an instruction of high similarity in the updated list of prediction instructions, performing a voice recognition function corresponding to the voice instruction.

These means can be each constructed as separate hardware or can be constructed as one piece of hardware.

It is appreciated that exemplary embodiments of the present invention according to the claims and description in the specification can be realized in the form of hardware, software or a combination of hardware and software. Any such software may be stored in a non-transient computer readable storage medium. The computer readable storage medium stores one or more programs (software modules), the one or more programs comprising instructions, which when executed by one or more processors in an electronic device, cause the electronic device to perform a method of the present invention. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are exemplary embodiments of machine-readable storage that are suitable for storing a program or programs comprising instructions that, when executed, implement exemplary embodiments of the present invention. Accordingly, exemplary embodiments provide a program comprising code for implementing apparatus or a method as claimed in any one of the claims of this specification and a machine-readable storage storing such a program.

As described above, exemplary embodiments of the present invention provide an electronic device for correcting an erroneously recognized instruction by a user's voice, thereby being capable of allowing a user to control a plurality of functions by means of only a voice instruction.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An electronic device for providing a voice recognition function, the device comprising:
an audio processor for processing a voice instruction for function execution;
a display unit for outputting an analysis result from the processing of the voice instruction;
at least one processor for executing computer programs;
a memory for storing data and instructions; and
at least one program stored in the memory and configured to be executable by the at least one processor,
wherein, when a voice instruction is input, the at least one program outputs a list of prediction instructions that are candidate instructions similar to the input voice instruction, updates, when a correction instruction correcting the output candidate instructions is input, the list of prediction instructions, and performs, if the correction instruction matches with an instruction of high similarity in the updated list of prediction instructions, a voice recognition function corresponding to the voice instruction.

2. The device of claim 1, wherein the program comprises an instruction of processing to create the list of prediction instructions and to define and output a candidate instruction having high similarity to the input voice instruction from among the list of prediction instructions.

3. The device of claim 1, wherein the program comprises an instruction of processing to update the list of prediction instructions by deleting a candidate instruction having high similarity to the input voice instruction from among the list of candidate instructions comprised in the list of prediction instructions, updating the previously created list of prediction instructions, and defining and outputting a candidate instruction having high similarity to the input voice instruction from among the updated list of prediction instructions.

4. The device of claim 1, wherein the program comprises an instruction of processing to make request for a re-input of an erroneously recognized instruction in the input voice instruction, and to create a list of prediction instructions that are candidate instructions similar to the re-input instruction.

5. The device of claim 4, wherein the program processes to output the erroneously recognized instruction in at least one of an audio form, a text form, and marking.

6. The device of claim 7, wherein the program comprises an instruction to sort the candidate instructions in order of similarity with the input voice instruction and to create the list of prediction instructions.

7. A computer-readable storage medium storing at least one program that comprises instructions of allowing an electronic device to perform a method claimed in claim 1 when it is executed by the electronic device.

8. A method for managing an input voice instruction in an electronic device, the method comprising:
receiving an input voice instruction from a user;
creating a list of candidate instructions that are similar to the input voice instruction;
outputting the list of candidate instructions; and
performing, based on a selection of one from among the list of candidate instructions by the user, a voice recognition function corresponding to the voice instruction.

9. The method of claim 8, further comprising updating, when a correction instruction correcting the output candidate instructions is input, the list of candidate instructions.

10. The method of claim 9, wherein the updating of the list of candidate instructions further comprises deleting the candidate instruction having the highest similarity to the input voice instruction, and outputting a new list of candidate instructions having a candidate instruction with a next highest similarity to the input voice instruction.

11. The method of claim 9, further comprising:
making a request for a re-input of an erroneously recognized instruction in the input voice instruction; and
creating a list of candidate instructions that are similar to the re-input instruction.

12. The method of claim 11, wherein the erroneously recognized instruction is output in at least one of an audio form, a text form, and marking.

13. The method of claim 8, wherein the outputting of the list of candidate instructions comprises sorting the candidate instructions in order of similarity with the input voice instruction.

14. An electronic device, comprising:
a touch screen display for outputting an analysis result from the processing of the voice instruction;
one or more processors;
memory for storing data and instructions; and
one or more programs, wherein the one or more programs are stored in the memory and configured to cause, when executed by the electronic device, the electronic device to perform the method of any one of claims 8 to 13.
